# EUROPÄISCHE PATENTSCHRIFT

(11) **EP 0 607 386 B1**
(45) Veröffentlichungstag und Bekanntmachung des Hinweises auf die Patenterteilung: **26.11.1997**
(21) Anmeldenummer: 93915692.3
(22) Anmeldetag: 06.08.1993
(51) Int. Cl.: B61C 7/00, B61F 3/12

(54) **SCHIENENFAHRZEUG**
RAIL VEHICLE
VEHICULE SUR RAILS

(30) Priorität: 14.08.1992 DE 4226924
(43) Veröffentlichungstag der Anmeldung: 27.07.1994
(73) Patentinhaber: ABB Daimler-Benz Transportation (Deutschland) GmbH, 16761 Hennigsdorf (DE)
(72) Erfinder: NIEMANN, Klaus, D-73642 Welzheim (DE); RICHTER, Wolfgang-Dieter, D-90610 Winkelhaid (DE); UEBEL, Lutz, D-90562 Heroldsberg (DE)
(86) Internationale Anmeldenummer: DE9300693
(87) Internationale Veröffentlichungsnummer: WO9404405

(56) Entgegenhaltungen:
- EP-A- 0 262 661
- EP-A- 0 413 318
- CH-A- 105 386
- DE-U- 8 814 445
- DE-U- 8 900 329
- DE-U- 8 905 173
- FR-A- 2 351 836
- US-A- 2 230 090
- US-A- 3 701 323
- RAILWAY GAZETTE INTERNATIONAL, Bd. 144, Nr. 3, März 1988, Seiten 164 - 165, MÜLLER-HERMANN: 'LOW FLOORS AND NO AXLES'
- ATZ, Bd. 94, Nr. 4, April 1992, Seiten 170 - 180, HAMSTEN: 'BAUREIHE 300, DIE NEUE REISEBUS-GENERATION VON KÄSSBOHRER'

## Beschreibung

Die Erfindung betrifft ein Schienenfahrzeug gemäß dem Oberbegriff des ersten Anspruchs.

Bei einem bekannten Schienenfahrzeug dieser Art (CH-A-105 386) sind in einer Ausführungsart zwei komplette, jeweils zweiachsige Omnibusse mit frontseitigem Antriebs-Motor an ihren Rückseiten miteinander gekoppelt. Um dabei von einem Fahrzeug zum anderen zu gelangen, ohne den Wagen zu verlassen, kann die Verbindung zwischen den beiden Wagenkästen wie bei D-Zügen ausgebildet sein. Es kann jedoch auch ein einzelner Wagenkasten an seinen beiden Enden auf jeweils zweiachsigen Drehgestellen gelagert sein, die zugleich als Führerstand und Antrieb ausgebildet sind. Zwischen Führerstand und Wagenkasten befindet sich jeweils ein Faltenbalg. Von Nachteil ist bei diesem Aufbau, daß jeweils vier Achsen und in jedem Fall zumindest eine gelenkige Verbindung im Gesamtaufbau erforderlich ist.

Es ist auch ein Standard-Gelenkbus für den Schienenverkehr bekannt (DE-U 89 00 329), bei dem ein zweiachsiger Wagenkastenteil und ein gelenkig damit verbundener einachsiger Wagenkastenteil zusammengebaut sind. Dabei ist weder der früheren Vorderachse noch der hinteren Schleppachse ein Antrieb zugeordnet. Der Antrieb erfolgt hierbei mittels eines Unterflurmotors und einem zugeordneten Achswendegetriebe über die mittlere Achse des insgesamt dreiachsigen Gelenkfahrzeugs.

Der Erfindung liegt die Aufgabe zugrunde, ein Schienenfahrzeug gemäß dem Oberbegriff des ersten Anspruchs Maßnahmen zu schaffen, das bei einfachem Aufbau aus möglichst wenig veränderten Bus-Serienelementen herstellbar ist.

Die Lösung dieser Aufgabe erfolgt gemäß der Erfindung durch die kennzeichnenden Merkmale des ersten Anspruchs.

Bei einem Aufbau eines Schienenfahrzeugs gemäß der Erfindung werden zwei serienmäßige, einachsige bzw. mit einer Zwillingsachse ausgestattete und mit einem Antrieb versehene Nachläufer zu einem Schienenfahrzeug zusammengefügt, wobei die beiden mit einem Antrieb ausgestatteten Nachläufer die Endelemente des Schienenfahrzeugs bilden.

Dabei können diese Endelemente starr mit ihren offenen Enden direkt oder unter Zwischenfügen eines Fensterfeldes miteinander verbunden sein, sie können jedoch auch im Bereich der offenen Enden gelenkig miteinander oder über einen für sich auf Rädern gelagerten Wagenkasten indirekt gekoppelt sein.

Im folgenden wird die Erfindung anhand von Zeichnungen beispielhaft näher beschrieben.

Es zeigen:
- Fig. 1a: ein zweiachsiges Fahrzeug;
- Fig. 1b): ein mehrachsiges Fahrzeug;
- Fig. 2): eine erste Ausführung einer Achsführung;
- Fig. 3): eine zweite Ausführung einer Achsführung;
- Fig. 4): eine Dreipunktlagerung von Radsätzen.

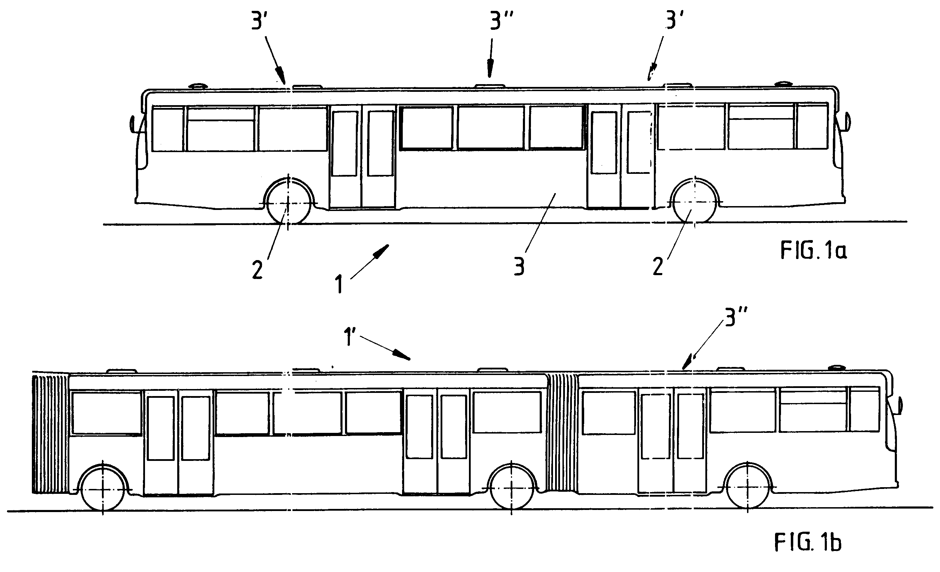

Die kleinste realisierbare Bauform ist ein zweiachsiges Fahrzeug 1 (Fig. 1a), das aus Gründen des Adhäsionsgewichts und des damit verbundenen Beschleunigungsvermögens auf beiden Achsen 2 angetrieben ist. Eine entsprechende Verknüpfung von Wagenkasten 3, Antrieb und Achse 2, findet sich im Nachläufer einer Schubgelenkbus-Bauart. Werden die Zwillingsräder der Achse gegen ein gummigefedertes Schienenrad mit entsprechend weicher radialer Charakteristik getauscht, unterliegen Achse 2 und Aufbau vergleichbaren Beanspruchungen und können bei gleichen konstruktiven Aufbau weiter verwendet werden. Die Orientierung des Nachläufers als Element im Fahrzeug ergibt sich aus dessen konstruktiven Aufbau. Um eine möglichst niedrige Einstiegshöhe zu erhalten, verbleibt das Antriebsende jeweils außen, während die zur Aufnahme der Gelenkkomponente verstärkte Kastenstruktur den mittleren Anschluß entweder direkt oder über ein beanspruchungsgerecht verstärktes Zwischenelement ermöglicht.

Fig. 1b zeigt ein Gelenkfahrzeug, dessen Endelement aus einem Nachläufer besteht.

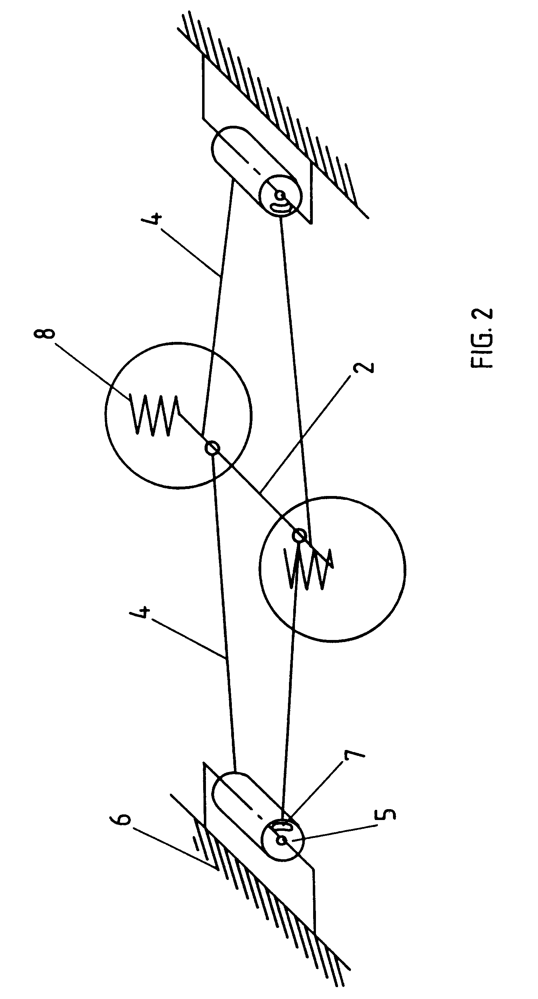

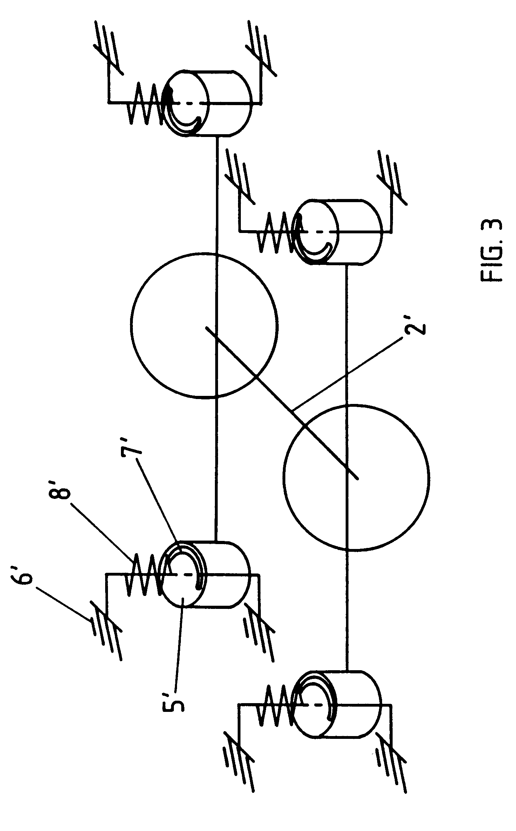

Die zur Erzielung der erforderlichen Laufstabilität erforderlichen Elemente können in Ergänzung der vorhandenen Achsführung angeordnet werden. Die Ausführung entsprechend Fig. 2 oder Fig. 3 erlaubt es dem Radsatz, sich unabhängig von der Fahrtrichtung unter dem Einfluß der Traktionskräfte zu zentrieren.

Die in Fig. 2 dargestellte Führung besteht aus zwei drehbar oder drehelastisch miteinander verbundenen Dreiecklenkern 4, von denen einer starr mit der Achse verbunden ist. Beide Lenker 4 sind über einseitig mit Luftkammern 7 versehene, axial vorgespannte Doppelkonusbuchsen 5 am Wagenkasten 6 so angelenkt, daß der Radsatz stets eine in Bezug auf den Anlenkpunkt ziehende Kaft ausübt. Die axiale Charakteristik der Buchse 5 bestimmt das Ausdrehverhalten des Radsatzes.

Die in Fig. 3 dargestellte Führung besteht aus 4, in der Wirkung zur Federung 8' parallel geschalteten, durch Auflastanteile vorgespannte Konuselemente 5', die durch entsprechende Anordnung von Luftkammern 7' und die daraus resultierenden Charakteristiken die vorstehend beschriebenen Eigenschaften der Radsatzführung ermöglichen.

Der Sinuslauf von Eisenbahnfahrzeugen wird u. a. durch den Abstand der in einem gemeinsamen Rahmen geführten Radsätze bestimmt. Wird der nachlaufende der Radsätze durch ein Losradpaar ersetzt, wird dieser Abstand unendlich groß und die Wellenlänge des Sinuslaufes erreicht ein von anderen Faktoren bestimmtes Maximum.

Um die damit verbundene Erhöhung der Grenzgeschwindigkeit für den vorliegenden Einsatzfall nutzen zu können, kann das zur Achskonstruktion gehörende Differential als Sperrdifferential ausgeführt und im oben beschriebenen Sinne gemeinsam mit dem Wendegetriebe betätigt werden.

Sieht der Einsatz des Fahrzeuges die vorwiegende Befahrung von Strecken mit engen Bögen und einer relativ niedrige Geschwindigkeit vor, können die Differentiale auch als momentenabhängig arbeitende Sperrdifferentiale zur Reduktion des Längsschlupfens bei Bogenfahrt ausgeführt werden.

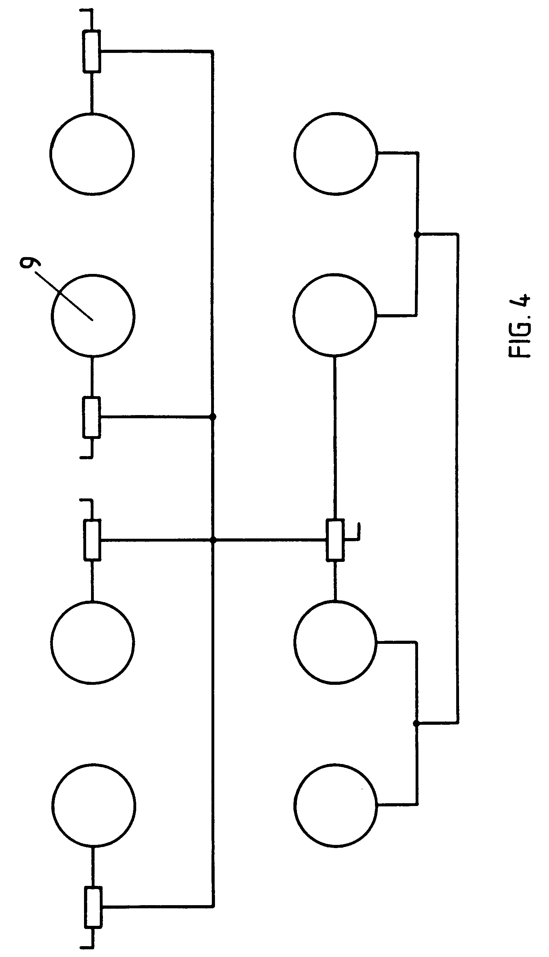

Die Anforderungen an die Entgleisungssicherheit lassen sich mit einer entsprechenden Verknüpfung von Luftfedern 9 einer beim Bus ausgeführten Variante gemäß Fig. 4 erfüllen. Hierbei wird durch eine interne Dreipunktlagerung eines jeden Radsatzes ein momentenfreies Einfedern gewährleistet, während durch die einseitig angeordnete Verbindung der Luftfederpaare einer Fahrzeugseite eine fahrzeugbezogene Dreipunktlagerung erreicht und damit ein kräfteneutrales Befahren von Gleisverwindungen ermöglicht werden.

## Patentansprüche

1. Schienenfahrzeug mit zwei Antrieben und mehreren Achsen, das in Leichtbauweise mit einem gegebenenfalls mehrgliedrigen Wagenkasten (3, 3', 3'') ausgeführt ist und bei dem Elemente des Wagenkastens (3, 3', 3'') und des Antriebs aus Omnibus-Serienteilen bestehen, dadurch gekennzeichnet, daß zwei je eine Achse mit einem Antrieb aufweisende einachsige Nachläufer von Schubgelenkbussen Elemente des Wagenkastens (3, 3', 3'') bilden, wobei die beiden Nachläufer mit ihren offenen Enden entweder als Hälften eines zweiachsigen Einzelfahrzeugs (1) zusammengefügt oder als Endelemente eines mehrgliedrigen Gelenkfahrzeugs (1') ausgebildet sind.

2. Schienenfahrzeug nach Anspruch 1,
**dadurch gekennzeichnet**,
daß beim Einzelfahrzeug (1) beide Nachläufer an der Gelenkanschlußstelle direkt oder über mindestens ein Fensterfeld miteinander verbunden sind.

3. Schienenfahrzeug nach Anspruch 1,
**dadurch gekennzeichnet**,
daß die Antriebsachsen (2) der Nachläufer mit querstabilen, radial weichen gummigefederten Rädern ausgerüstet sind.

4. Schienenfahrzeug nach Anspruch 3,
**dadurch gekennzeichnet**,
daß die Führung der Achsen so ausgeführt ist, daß eine von der Traktionskraft-Richtung bestimmte Deichselanlenkung diese Achse stabilisiert.

5. Schienenfahrzeug nach Anspruch 3,
**dadurch gekennzeichnet**,
daß die Differentiale der Antriebsachsen als Sperrdifferentiale mit momentenabhängiger Sperrwirkung ausgeführt sind.

6. Schienenfahrzeug nach Anspruch 3,
**dadurch gekennzeichnet**,
daß die Differentiale der Antriebsachsen als schaltbare Sperrdifferentiale ausgeführt sind, wobei diese über die Fahrtwendeschalter so betätigt werden, daß das in Fahrtrichtung vorlaufende Differential gesperrt, das nachlaufende funktionsfähig ist.

7. Schienenfahrzeug nach Anspruch 1,
**dadurch gekennzeichnet**,
daß der Wagenkasten an jeder Achse über vier Luftfederbälge abgestützt ist, von denen jeweils zwei auf der gleichen Fahrzeugseite liegende Bälge einer Achse miteinander verbunden sind und mit dem entsprechenden Balgpaar der zweiten Achse eines Fahrzeuges oder Fahrzeugteiles über eine gedrosselte Verbindungsleitung ebenfalls verbunden sind.

## Claims

1. A rail vehicle with two drives and several axles, which is designed as a light model optionally with a multiple section coach body (3, 3', 3''), in which elements of the coach body (3, 3', 3'') and of the drive consist of serial-production bus parts, characterised in that two single-axle trailers of pusher articulated buses, each having one driven axle, form elements of the coach body (3, 3', 3''), wherein the two trailers are joined together by their open ends either as halves of a two-axle single vehicle (1) or are end elements of a multiple-unit articulated vehicle (1').

2. A rail vehicle according to Claim 1, characterised in that in the case of the single vehicle (1), both trailers are joined together at the articulation point directly or via at least one window panel.

3. A rail vehicle according to Claim 1, characterised in that the drive axles (2) of the trailers are equipped with laterally stable, radially resilient rubber-sprung wheels.

4. A rail vehicle according to Claim 3, characterised in that the axle guidance system is constructed such that an articulation linkage determined by the direction of the traction force stabilises this axle.

5. A rail vehicle according to Claim 3, characterised in that the differentials of the drive axles are constructed as locking differentials with a moment-dependent locking effect.

6. A rail vehicle according to Claim 3, characterised in that the differentials of the drive axles are constructed as switchable locking differentials, these being operated via the direction reversing switch such that the preceding differential in the direction of travel is locked, and the one following is operative.

7. A rail vehicle according to Claim 1, characterised in that the coach body is supported on each axle via four air spring bellows, of which, respectively, two bellows of an axle situated on the same side of the vehicle are joined together and are also joined to the corresponding pair of bellows of the second axle of a vehicle or vehicle section via a throttled connection line.

## Revendications

1. Véhicule ferroviaire avec deux propulsions et plusieurs essieux, qui est réalisé en construction légère, avec une caisse éventuellement à éléments multiples (3, 3', 3''), et dans lequel des éléments de la caisse (3, 3', 3'') et de la propulsion sont constitués d'organes en série d'omnibus, caractérisé en ce que deux bogies arrière de bus à joint à glissière, à un seul essieu, comportant un essieu muni d'une propulsion, forment des éléments de la caisse (3, 3', 3''), les deux bogies arrière étant, par leurs extrémités ouvertes, ou bien réunis sous forme de moitiés d'un véhicule individuel (1) à deux essieux, ou bien constitués comme des éléments terminaux d'un véhicule articulé (1') à éléments multiples.

2. Véhicule ferroviaire selon la revendication 1, caractérisé en ce que, dans le véhicule individuel (1), les deux bogies arrière sont assemblés l'un à l'autre, directement ou au moins par l'intermédiaire d'un châssis de fenêtre, au point de raccordement de l'articulation.

3. Véhicule ferroviaire selon la revendication 1, caractérisé en ce que les essieux de propulsion (2) des bogies arrière sont équipés de roues à stabilité transversale, élastiques, présentant une souplesse radiale.

4. Véhicule ferroviaire selon la revendication 3, caractérisé en ce que le guidage des essieux est réalisé de telle sorte qu'une articulation à timon, définie par la direction de la force de traction, stabilise cet essieu.

5. Véhicule ferroviaire selon la revendication 3, caractérisé en ce que les différentiels des essieux de propulsion sont réalisés comme des engrenages différentiels à verrouillage, avec un effet de verrouillage qui dépend du couple.

6. Véhicule ferroviaire selon la revendication 3, caractérisé en ce que les différentiels des essieux de propulsion sont réalisés comme des engrenages différentiels à verrouillage inversables, auquel cas ces différentiels sont, par l'intermédiaire d'inverseurs, manoeuvrés de façon que le différentiel en position avant dans le sens de la marche soit verrouillé, alors que celui qui se trouve à l'arrière est fonctionnel.

7. Véhicule ferroviaire selon la revendication 1, caractérisé en ce que la caisse est, sur chaque essieu, soutenue par quatre coussinets d'air, parmi lesquels les groupes de deux coussinets d'un essieu, disposés sur le même côté du véhicule, sont assemblés l'un à l'autre, et de même sont assemblés à la paire de coussinets correspondante du deuxième essieu d'un véhicule ou d'une partie de véhicule, par l'intermédiaire d'une conduite de raccordement étranglée.
